# EUROPÄISCHE PATENTSCHRIFT

(11) **EP 2 590 591 B1**
(45) Veröffentlichungstag und Bekanntmachung des Hinweises auf die Patenterteilung: **18.04.2018**
(21) Anmeldenummer: 11741416.9
(22) Anmeldetag: 06.07.2011
(51) Int. Cl.: A61C 1/08, A61C 13/12, A61C 13/00

(54) **VERFAHREN ZUR HERSTELLUNG EINER ZAHNMEDIZINISCHEN BOHRSCHABLONE**
METHOD FOR PRODUCING A DENTAL DRILLING TEMPLATE
PROCÉDÉ POUR LA FABRICATION D'UN GABARIT DE PERÇAGE MÉDICO-DENTAIRE

(30) Priorität: 06.07.2010 DE 102010031018
(43) Veröffentlichungstag der Anmeldung: 15.05.2013
(73) Patentinhaber: Sirona Dental Systems GmbH, 64625 Bensheim (DE)
(72) Erfinder: PIEPER, Reinhard, 64625 Bensheim (DE)
(74) Vertreter: Sommer, Peter
(86) Internationale Anmeldenummer: PCT/EP2011/061353
(87) Internationale Veröffentlichungsnummer: WO 2012/004282

(56) Entgegenhaltungen:
- EP-A1- 2 072 018
- WO-A1-2011/091382
- WO-A2-2009/100863
- DE-A1- 4 334 360
- FR-A1- 2 446 629
- US-A- 1 933 718
- US-A- 5 927 982
- US-A1- 2006 281 046
- US-A1- 2010 082 148

## Beschreibung

### Technisches Gebiet

Die Erfindung betrifft ein Verfahren zur Herstellung einer zahnmedizinischen Bohrschablone, die eine Führungsbohrung und eine Auflagefläche aufweist, wobei ein virtuelles 3D-Bohrschablonenmodell der Bohrschablone mit einer virtuellen Führungsbohrung entlang einer Führungsbohrungsachse und mit einer virtuellen Auflagefläche vorhanden ist.

### Stand der Technik

Aus dem Stand der Technik sind mehrere Verfahren und Vorrichtungen zur Herstellung einer Bohrschablone mit einem Führungsloch zum Anbringen eines Zahnimplantats bekannt.

Das Handbuch "Herstellung und Anwendung einer individuellen Bohrschablone" von der Straumann GmbH offenbart ein Herstellungsverfahren einer Bohr Schablone. In einem ersten Schritt wird ein Situationsmodell aus Gips gefertigt. In einem zweiten Schritt wird eine Kunststoffschiene auf das Sensationsmodell tiefgezogen. In einem dritten Schritt wird ein zweites Gipsmodell hergestellt, mit Blick an der geplanten Implantatposition zersägt, dass gemessene Knochenprofil übertragen und einer Implantatachse festgelegt. In dem vierten Schritt wird auf dem ursprünglichen Situationsmodell ein Wax-Up der geplanten Restauration hergestellt. In einem fünften Schritt wird ein Duplikat des Wax-Upmodells hergestellt und eine Kunststoffschiene darauf tiefgezogen. In einem sechsten Schritt wird die neue Kunststoffschiene auf das Situationsmodell übertragen. In einem siebten Schritt wird die ermittelte Implantatposition und Implantatachse auf dem Situationsmodell markiert und mittels eines Parallelometers mit einem Pilotbohrer die Bohrung durchgeführt. In einem achten Schritt wird ein Titanstift in die Bohrung eingesetzt. In einem neunten Schritt wird über dem im Modell steckenden Titanstift eine neue Kunststoffschiene tiefgezogen. In einem zehnten Schritt wird die Kunststoffschiene vom Modell genommen und der Titanstift durch einen kürzeren Titanstift ersetzt. In einem elften Schritt wird die Kunststoffschiene auf das zuvor angefertigte Modell mit eingezeichnetem Knochenprofil gesetzt und die Implantatachse kontrolliert. Bei Bedarf kann die Lage und Richtung der Bohrung noch korrigiert werden. In einem zwölften Schritt wird ein Titanstift mit einer Abstufung in die Bohrung gesteckt und eventuell vorhandene Unterschnitte mit Gips, Wachs oder Kunststoff ausgeblockt. Über den Titanstift mit Abstufung wird eine neue Kunststoffschiene tiefgezogen. Nach Entfernen des Titanstifts mit Abstufung wird eine okklusale Öffnung in die Kunststoffschiene geschnitten oder geschliffen und eine Bohrhülse mit Rand wird in die Kunststoffschiene eingesetzt. Anschließend wird die Kunststoffschiene im Bereich der Implantationsstelle beschliffen oder zugeschnitten. Alternativ dazu kann im neunten Schritt eine Bohrhülse über den Titanstift gestülpt werden und die vier der Bohrinsel mit Kunststoff oder Gips fixiert werden. Anschließend wird eine Kunststoffschiene über die Bohrhülse tiefgezogen und die Bohröffnung zur Aufnahme des Pilotbohrers freigeschliffen.

DE 199 52 962 A1 offenbart ein Verfahren zur Erstellung einer Bohrhilfe für ein Zahnimplantat, wobei zunächst eine Röntgenaufnahme des Kiefers und danach eine dreidimensionale optische Vermessung der sichtbaren Oberfläche des Kiefers und der Zähne durchgeführt wird. Die Messdatensätze von der Röntgenaufnahme und der dreidimensionalen optischen Aufnahme werden miteinander korreliert. Anhand der vorhandenen Informationen, wie der Art und der Position des Implantats relativ zu den Nachbarzähnen, wird eine Schablone geplant und generiert, die auf den Nachbarzähnen aufliegt und dadurch die exakte Bohrung des Implantatführungslochs ermöglicht wird. Anhand der Röntgendaten kann das Implantat in bekannter Weise bestimmt und positioniert werden. Anhand der gewonnen Informationen über die Oberflächenstruktur, d.h. die Okklusalflächen benachbarter Zähne kann eine Implantatshilfe in Gestalt einer Bohrschablone mittels einer CAD/CAM-Einheit ausgeschliffen werden. Anhand der Messdaten ist eine CAD/CAM-Maschine in der Lage die Bohrschablone mit dem Negativ der Okklusalflächen und einem Führungslauf für den Bohrer zu fertigen. Auf die Bohrschablone wird ein Anschlag übertragen, der die Bohrtiefe bestimmt.
WO 99/32045 offenbart ein Verfahren zur Herstellung einer dentalen Bohrhilfe für Implantate. Zunächst wird unter Verwendung eines Kieferbildes mit Bezug auf eine Abdruckfläche ein dreidimensionales Rechnerbild modelliert. Danach wird die Lage und die Bohrtiefe der Bohrlöcher bestimmt und ein Satz von Implantatbohrlochkoordinaten in eine computergesteuerte Fertigungsmaschine eingespeist. Mittels eines Präzisionswerkzeugs wird im Bohrkörper für jeden der zuvor eingespeisten Bohrlochkoordinatensätze ein Bohrführungssockel vorbereitet mit einer entsprechend der anhand des Kieferabschnitts ermittelten Bohrlochposition und Bohrlochorientierung.

EP 2 072 018 offenbart ein Verfahren zur Herstellung einer zahnmedizinischen Bohrschablone aus einem Rohling, wobei ein virtuelles 3D-Rohlingsmodell des Rohlings mit einer virtuellen Führungsbohrungsachse und mit einer virtuellen Auflagefläche vorhanden ist.

Ein Nachteil dieser Verfahren besteht darin, dass die meisten CAD/CAM-Maschinen in ihren Freiheitsgraden eingeschränkt sind und insbesondere windschief zueinander angeordnete Bohrungen nicht durchführbar sind. Daher ist die Herstellung von Bohrschablonen mittels einer CAD/CAM-Maschine nur für begrenzte Indikationsbereiche möglich. In den meisten Fällen erfolgt die Fertigung der Bohrschablone entweder individuell im Labor oder nach vorheriger CAD/CAM-Planung zentral beispielsweise unter Verwendung eines Hexapods, dessen Konstruktion eine Beweglichkeit des zu bearbeitenden Objekts in allen sechs Freiheitsgraden ermöglicht, und mittels eines Parallelometers zur Durchführung senkrechter Bohrungen. Bei der zentralen Fertigung finden meist CT-DVT Schablonen, Aufbissplatten und Kiefermodelle aus Gips Anwendung. Diese werden auf den aufwendig gestalteten Hexapod montiert und mit Hilfe mehrere Messpunkte eingestellt. Dieser Vorgang ist sehr aufwendig und damit auch fehleranfällig.
Die Aufgabe dieser Erfindung besteht daher darin, ein Verfahren bereitzustellen, die die Herstellung einer beliebigen Bohrschablone mit windschiefen Bohrachsen unter Verwendung einer herkömmlichen Fertigungsmaschine mit eingeschränkten Freiheitsgraden ermöglicht.

### Darstellung der Erfindung

Der Erfindungsgegenstand ist ein Verfahren zur Herstellung einer zahnmedizinischen Bohrschablone aus einem Rohling, die eine Führungsbohrung und eine Auflagefläche aufweist, wobei ein virtuelles 3D-Bohrschablonenmodell der Bohrschablone mit einer virtuellen Führungsbohrung entlang einer Führungsbohrungsachse und mit einer virtuellen Auflagefläche vorhanden ist, wobei i. das virtuelle 3D-Bohrschablonenmodell virtuell innerhalb eines 3D-Rohlingsmodells des Rohlings angeordnet wird, um die Bohrschablone entsprechend der Form und Lage des virtuellen 3D-Bohrschablonenmodells innerhalb des 3D-Rohlingsmodells aus dem Rohling herauszuarbeiten, ii. wobei vor dem Herausarbeiten der Bohrschablone aus dem Rohling computergestützt virtuell eine Durchtrittsstelle der Führungsbohrungsachse auf einer Außenseite des 3D-Rohlingsmodells bestimmt wird und an der Durchtrittsstelle der Führungsbohrungsachse auf der Außenseite des Rohlings eine Markierung angebracht wird, wobei die Markierung an der Durchtrittsstelle der Führungsbohrungsachse in Form einer Vertiefung angebracht wird, iii. oder wobei auf einer Außenseite des virtuellen 3D-Bohrschablonenmodells eine Durchtrittsstelle der Führungsbohrungsachse bestimmt wird und während bzw. nach dem Herausarbeiten der Bohrschablone aus dem Rohling an der Durchtrittsstelle auf der Außenseite der Bohrschablone eine Markierung angebracht wird, wobei die Markierung an der Durchtrittsstelle der Führungsbohrungsachse in Form einer Vertiefung angebracht wird. Die herzustellende zahnmedizinische Bohrschablone kann eine beliebige Bohrschablone, wie eine durch die Nachbarzähne getragene Bohrschablone für minimal invasive Chirurgie sowie eine durch den Kieferknochen getragene Bohrschablone für sogenannten "Open-Flap" Chirurgie, sein. Die Bohrschablone kann sowohl für Pilotbohrungen als auch zum Einsetzen von Einsteckhülsen gefertigt werden.
Die Führungsbohrung dient zur Führung eines Bohrers, um die geplante Implantatbohrung zum Einsetzen eines Implantats, wie in der Implantatplanung errechnet, durchzuführen. Der Bohrer kann ein so genannter Pilotbohrer sein. Alternativ kann die Führungsbohrung so ausgestaltet sein, dass in die Führungsbohrung eine Bohrhülse eingestellt werden kann, wobei die innere Fläche der Bohrhülse zur Führung des Bohrers dient. Bei der Implantatplanung kann eine Röntgenaufnahme des Kiefers und eine dreidimensionale optische Vermessung der sichtbaren Oberfläche des Kiefers und der Zähne verwendet werden, um den Implantattyp und die Implantatlage relativ zum Kiefer virtuell festzulegen. Insbesondere werden die genaue Lage, der relative Winkel zum Kiefer und die Tiefe der einzelnen Bohrungen zum Einsetzen der Implantate geplant. Anhand der durchzuführenden Implantatbohrungen wird dann ein virtuelles 3D-Bohrschablonenmodell der Bohrschablone geplant, welches virtuelle Führungsbohrungen und eine virtuelle Auflagefläche aufweist, wobei die Auflagefläche vorzugsweise als ein negatives Gegenstück zu der Oberfläche der Nachbarzähne geformt ist.

Das geplante 3D-Bohrschablonenmodell der Bohrschablone ist der Ausgangspunkt des vorliegenden erfinderischen Verfahrens. In einem ersten Schritt wird das virtuelle 3D-Bohrschablonenmodell virtuell innerhalb des 3D-Rohlingsmodells eines Rohlings angeordnet. Dies kann mittels eines Computers mit einem Monitor und einer Maus erfolgen, wobei der Benutzer virtuelle Werkzeuge zum Drehen und Verschieben des 3D-Bohrschablonenmodells innerhalb des 3D-Rohlingsmodells verwenden kann. Nach dem Anordnen des 3D-Bohrschablonenmodells können die Positionsdaten abgespeichert werden. In einem nächsten Schritt wir die Bohrschablone entsprechend der Planung des virtuellen 3D-Bohrschablonenmodells innerhalb des 3D-Rohlingsmodells aus dem Rohling herausgearbeitet. Dabei kann ein Rohling aus Keramik oder Kunststoff verwendet werden, der in seinen Abmessungen groß genug ist, um daraus die Bohrschablone herauszuarbeiten. Der Rohling kann in seinen Abmessungen eine beliebige geometrische Grundform sein, wobei er keine patientenbezogenen Elemente, wie ein Abdruck der Patientenzähne, beinhaltet. Die Bohrschalbohne wird mittels einer Fertigungsvorrichtung herausgearbeitet, die eine herkömmliche CAD/CAM-Vorrichtung mit eingeschränkten Freiheitsgraden sein kann. Vor dem Herausarbeiten der Bohrschablone und nach der Anordnung des 3D-Bohrschablonenmodells innerhalb des 3D-Rohlingmodells wird mittels eines Computers virtuell eine oder mehrere Durchtrittsstellen der Führungsbohrungsachse auf der Außenseite des 3D-Rohlingsmodells oder auf der Außenseite des virtuelle 3D-Bohrschablonenmodells bestimmt. Dies kann computergestützt automatisch erfolgen, indem der Benutzer am Ende des Planungsvorgangs diese Funktion beispielsweise mittels eines virtuellen Schalters auslöst.
Die Positionsdaten der Durchtrittsstellen relativ zum Rohling können abgespeichert werden und an die Fertigungsvorrichtung weitergeleitet werden. In einem weiteren Schritt werden an einer oder mehreren Durchtrittsstellen der Führungsbohrungsachse entweder auf der Außenseite des Rohlings oder auf der Außenseite der Bohrschablone ein oder mehrere Markierungen angebracht. Falls nach einem ersten Ausführungsbeispiel zuerst die Bohrungen durchgeführt werden und erst danach die Bohrschablone aus dem Rohling herausgearbeitet wird, werden die Markierungen an der Außenfläche des Rohlings angebracht. Falls nach dem zweiten Ausführungsbeispiel des Verfahrens zuerst die Bohrschablone aus dem Rohling herausgearbeitet wird und erst danach die Führungsbohrungen durchgeführt werden, werden die Markierungen an der Außenfläche der Bohrschablone angebracht. Der Vorteil des erfinderischen Verfahrens ist, dass die Bohrungen wie geplant in einer von der Fertigungsvorrichtung separaten Bohrvorrichtung hergestellt werden. Die Bohrvorrichtung kann ein herkömmlicher Parallelometer sein. Die geplanten Führungsbohrungen werden anhand der Markierungen mittels der Bohrvorrichtung hergestellt, indem entweder der Rohling oder die fertige Bohrschablone in die Bohrvorrichtung so eingespannt wird, dass die Achse eines Bohrers der Bohrvorrichtung mit der geplanten Führungsbohrungsachse zwischen den beiden Markierungen übereinstimmt.

Das erfinderische Verfahren ermöglicht damit, einfach und schnell eine Bohrschablone mittels einer beliebigen herkömmlichen Fertigungsvorrichtung und einer Bohrvorrichtung direkt in der Zahnarztpraxis herzustellen. Damit ist eine Herstellung der Bohrschablone anhand von Planungsdaten in einem zentralen Labor nicht mehr notwendig.

Vorteilhafterweise kann der Rohling vor dem Herausarbeiten der Bohrschablone in eine Fertigungsvorrichtung eingespannt werden und vermessen werden.

Durch die Vermessung des eingespannten Rohlings innerhalb der Fertigungsvorrichtung wird die Lage und Ausrichtung relativ zur Fertigungsvorrichtung festgestellt und dann in einem weiteren Schritt ein Werkzeug der Fertigungsvorrichtung, wie ein Fräswerkzeug, so angesteuert, dass die Außenfläche der Bohrschablone nach den Planungsdaten aus dem eingespannten Rohling herausgefräst wird.

Vorteilhafterweise kann die geplante Führungsbohrung vor dem Herausarbeiten der Bohrschablone aus dem Rohling hergestellt werden. Vor dem Herausarbeiten der Bohrschablone aus dem Rohling kann computergestützt virtuell eine Durchtrittsstelle der Führungsbohrungsachse auf einer Außenseite des 3D-Rohlingsmodells bestimmt werden. Der Rohling kann im nächsten Schritt in die Fertigungsvorrichtung eingespannt und vermessen werden. An der Durchtrittsstelle der Führungsbohrungsachse auf der Außenseite des Rohlings wird dann eine Markierung angebracht. Der Rohling wird aus der Fertigungsvorrichtung entnommen. Danach wird der markierte Rohling in eine Spannvorrichtung eingespannt, wobei mittels einer Fixiervorrichtung der Rohling in seiner Lage fixiert wird. Die Spannvorrichtung wird danach entfernt und die geplante Führungsbohrung wird mittels einer Bohrvorrichtung an der angebrachten Markierung durchgeführt.

Bei dieser Ausführungsform des Verfahrens wird die Führungsbohrung zunächst am Rohling durchgeführt und erst im zweiten Schritt wird die Bohrschablone aus dem Rohling herausgearbeitet, so dass die Führungsbohrung an der geplanten Stelle und mit der geplanten Ausrichtung in der Bohrschablone angeordnet ist. Es können auch mehrere Führungsbohrungen hergestellt werden. Bei mehreren Führungsbohrungen müssten die Schritte des Einspannens des Rohlings in die Spannvorrichtung, das Fixieren mittels der Fixiervorrichtung, des Entfernens aus der Spannvorrichtung und die Durchführung der Führungsbohrung mittels der Bohrvorrichtung für jede Führungsbohrung wiederholt werden. Erfindungsgemäß ist die Markierung an der Durchtrittsstelle der Führungsbohrungsachse in Form einer Vertiefung angebracht. Diese Markierung in Form einer Vertiefung kann vorteilhafterweise mittels der Fertigungsvorrichtung angebracht werden.

Dadurch wird das Einspannen des Rohlings in der Spannvorrichtung erleichtert.
Vorteilhafterweise kann die Spannvorrichtung zwei Stiftspitzen aufweisen und am Rohling zwei Markierungen an beiden Durchtrittsstellen der Führungsbohrung angebracht werden. Der markierte Rohling wird dann in der Spannvorrichtung an den beiden Markierungen zwischen den Stiftspitzen eingespannt.
Dadurch wird der Rohling, wie geplant, in der Spannvorrichtung positionsgenau eingespannt, um die geplante Führungsbohrung durchzuführen. Die Vertiefungen am Rohling können als ein Gegenstück zu den beiden Stiftspitzen ausgebildet sein. Dadurch wird ein positionsgenaues Einspannen des Rohlings ermöglicht.

Vorteilhafterweise kann die geplante Führungsbohrung erst nach dem Herausarbeiten der Bohrschablone aus dem Rohling hergestellt werden. Beim Herausarbeiten der Bohrschablone aus dem Rohling wird eine Markierung auf einer Oberfläche der Bohrschablone angebracht, wobei ein Rohlingshalter stabil mit der Bohrschablone verbunden bleibt. Die Bohrschablone mit dem Rohlingshalter wird aus der Fertigungsvorrichtung entnommen. Die Bohrschablone wird in eine Spannvorrichtung eingespannt, wobei mittels einer Fixiervorrichtung der Rohling in seiner Lage fixiert wird. Die Spannvorrichtung wird entfernt. Mittels einer Bohrvorrichtung wird dann die geplante Führungsbohrung an der Markierung hergestellt. Bei dieser alternativen Ausführungsform des Verfahrens wird im ersten Schritt die Bohrschablone aus dem Rohling herausgearbeitet und erst im zweiten Schritt die geplante Führungsbohrung durchgeführt. Bei mehreren durchzuführenden Führungsbohrungen werden die Schritte des Einspannens der Bohrschablone in die Spannvorrichtung, das Fixieren des Rohlings mittels der Fixiervorrichtung und das Herstellen der Führungsbohrung mittels der Bohrvorrichtung für jede einzelne Führungsbohrung wiederholt. Dadurch ist die Bohrschablone einfacherer als ein Rohling mit größeren Abmessungen bei der Durchführung der Führungsbohrungen zu handhaben. Die Markierung ist auf der Oberfläche der Bohrschablone in Form einer Vertiefung, vorteilhafterweise mittels der Fertigungsvorrichtung, angebracht. Durch die Markierungen in Form einer Vertiefung auf der Oberfläche der Bohrschablone kann die Bohrschablone positionsgenau, wie geplant, eingespannt werden, um die geplante Führungsbohrung durchzuführen.

Vorteilhafterweise kann die Spannvorrichtung zwei Stiftspitzen aufweisen und an der Bohrschablone zwei Markierungen an beiden Durchtrittsstellen der Führungsbohrung angebracht sein, wobei die markierte Bohrschablone in der Spannvorrichtung an den beiden Markierungen zwischen den Stiftspitzen eingespannt wird.

Dadurch wird eine genaue Positionierung der markierten Bohrschablone in der Spannvorrichtung ermöglicht. Die als Vertiefung ausgebildeten Markierungen können als Gegenstück zu den beiden Stiftspitzen ausgebildet sein.

Vorteilhafterweise kann die Fixiervorrichtung Gummibacken aufweisen und der Rohling zwischen den Gummibacken eingespannt werden.

Dadurch wird eine sichere Fixierung der Position in der Spannvorrichtung ermöglicht, um die geplante Führungsbohrung durchzuführen.

Vorteilhafterweise kann die geplante Führungsbohrung vor dem Herausarbeiten der Bohrschablone aus dem Rohling hergestellt werden, wobei vor dem Herausarbeiten der Bohrschablone aus dem Rohling computergestützt virtuell eine Durchtrittsstelle der Führungsbohrungsachse auf einer Außenseite des 3D-Rohlingsmodells bestimmt wird, wobei der Rohling in die Fertigungsvorrichtung eingespannt und vermessen wird. An der Durchtrittsstelle der Führungsbohrungsachse auf der Außenseite des Rohlings wird eine Markierung angebracht. Danach wird der Rohling aus der Fertigungsvorrichtung entnommen. Der markierte Rohling wird an einem Rohlingshalter in eine Spannvorrichtung eingespannt. Die Spannvorrichtung weist dabei Verstellungsmittel zur Verstellung eines Neigungswinkels und eines Drehwinkels des Rohlings relativ zur Spannvorrichtung auf. Der Rohling wird dann unter Verwendung dieser Verstellungsmittel bezüglich des Neigungswinkels und des Drehwinkels so positioniert, dass die geplante Führungsbohrungsachse mit einer Achse eines Werkzeugs einer Bohrvorrichtung zur Durchführung der geplanten Führungsbohrung übereinstimmt. Mittels der Bohrvorrichtung wird die geplante Führungsbohrung an der Markierung durchgeführt.

Bei diesem alternativen Verfahren wird eine Spannvorrichtung mit Verstellmitteln zur Verstellung eines Neigungswinkels und eines Drehwinkels des Rohlings verwendet. Dadurch ist der Verfahrensschritt des Fixierens und des Entfernens der Spannvorrichtung vor dem Bohrvorgang mittels der Bohrvorrichtung nicht notwendig. Bei der Planung der Führungsbohrung wird für jede Führungsbohrung ein individueller Neigungswinkel und Drehwinkel computergestützt berechnet. Der eingespannte Rohling wird dann mittels der Verstellungsmittel in seinem Neigungswinkel und Drehwinkel entsprechend eingestellt. Dann kann die Spannvorrichtung unter die Bohrvorrichtung geschoben werden, so dass die Achse des Werkzeugs, wie eines Bohrers oder eines Fräsers, mit der Führungsbohrungsachse übereinstimmt. Dadurch wird die geplante Bohrung durch den Rohling präzise durchgeführt, ohne dabei eine Fixiervorrichtung verwenden zu müssen.

Vorteilhafterweise kann die geplante Führungsbohrung erst nach dem Herausarbeiten der Bohrschablone aus dem Rohling hergestellt werden, wobei vor dem Herausarbeiten der Bohrschablone aus dem Rohling computergestützt virtuell eine Durchtrittsstelle der Führungsbohrungsachse auf einer Au-ßenseite des 3D-Bohrschablonemodells bestimmt wird. Der Rohling wird dann in die Fertigungsvorrichtung eingespannt und vermessen, wobei beim Herausarbeiten der Bohrschablone aus dem Rohling eine Markierung an der Durchtrittsstelle auf einer Oberfläche der Bohrschablone angebracht wird. Ein Rohlingshalter bleibt dabei stabil mit der Bohrschablone verbunden. Die Bohrschablone mit dem Rohlingshalter wird aus der Fertigungsvorrichtung entnommen. Die markierte Bohrschablone wird dann in eine Spannvorrichtung am Rohlingshalter eingespannt. Die Spannvorrichtung weist Verstellungsmittel zur Verstellung eines Neigungswinkels und eines Drehwinkels des Rohlings relativ zur Spannvorrichtung auf, wobei der Rohling unter Verwendung dieser Verstellungsmittel bezüglich des Neigungswinkels und des Drehwinkels so positioniert wird, dass die geplante Führungsbohrungsachse mit einer Achse eines Werkzeugs einer Bohrvorrichtung zur Durchführung der geplanten Führungsbohrung übereinstimmt. Mittels der Bohrvorrichtung wird anschließend die geplante Führungsbohrung an der Markierung durchgeführt.

Bei diesem alternativen Verfahren wird die gleiche Spannvorrichtung, wie beim vorherigen Verfahren, mit Verstellungsmitteln bezüglich des Neigungswinkels und des Drehwinkels verwendet. Der Unterschied besteht darin, dass zunächst die Bohrschablone aus dem Rohling herausgearbeitet wird und erst danach die markierte Bohrschablone in die Spannvorrichtung eingespannt wird. Die Verstellungsmittel werden auf den berechneten Neigungswinkel und den berechneten Drehwinkel für jede Führungsbohrung eingestellt und die Spannvorrichtung unter die Bohrvorrichtung so geschoben wird, dass die Achse des Bohrwerkzeugs mit der Führungsbohrungsachse übereinstimmt und anschließend die Führungsbohrung an der Markierung durchgeführt wird. Dabei ist am Rohlingshalter ein Stift vorgesehen, der in eine Nut in der Aufnahme des Rohlings verdrehsicher hineingreift.

Vorteilhafterweise können die Verstellungsmittel eine Verstellung des Neigungswinkels zwischen 0° und 90° und eine Verstellung des Drehwinkels zwischen 0° und 360° ermöglichen.
Dadurch wird jede Führungsbohrung mit beliebiger Ausrichtung ermöglicht.
Vorteilhafterweise können mittels der Fertigungsvorrichtung mehrere Markierungen am Rohling beziehungsweise an der Bohrschablone angebracht werden und jede einzelne Führungsbohrung mit einer individuellen Nummerierung versehen werden.
Durch die individuelle Nummerierung jeder geplanten Führungsbohrung wird es dem Benutzer erleichtert zu der durchzuführenden Führungsbohrung den passenden berechneten Neigungswinkel und Drehwinkel auszuwählen, so dass fehlerhafte Bohrungen verhindert werden.
Vorteilhafterweise kann die Bohrschablone einen Anschlag an der Führungsbohrung aufweisen, der zur Beschränkung der Tiefe der durchzuführenden Bohrung dient. Der Anschlag wird dabei als ein Teil der Bohrschablone aus dem Rohling herausgearbeitet.
Dadurch wird computergestützt automatisch mittels der Fertigungsvorrichtung der Anschlag zusammen mit der Bohrschablone gefertigt, der für jede durchzuführende Bohrung die Tiefe festlegt. Eine Spannvorrichtung zum Einspannen eines Rohlings zur Herstellung einer Bohrschablone umfassend, einen Sockel, ein erstes Verstellungsmittel zur Verstellung eines Neigungswinkels des Rohlings, ein zweites Verstellungsmittel zur Verstellung eines Drehwinkels des Rohlings, kann mit dem Verfahren benutzt werden. Der Rohling ist unter Verwendung der beiden Verstellungsmittel bezüglich des Neigungswinkels und des Drehwinkels relativ zur Spannvorrichtung so positionierbar, dass eine geplante Führungsbohrungsachse mit der Achse eines Werkzeugs einer Bohrvorrichtung zur Durchführung einer Führungsbohrung übereinstimmt.

Mittels dieser Spannvorrichtung kann das erfinderische Verfahren dadurch auch ohne Verwendung einer Fixiervorrichtung durchgeführt werden. In einem ersten Schritt werden mittels der Verstellungsmittel der Neigungswinkel und der Drehwinkel für jede Bohrung eingestellt und fixiert und anschlie-ßend im zweiten Schritt der Sockel unter die Bohrvorrichtung geschoben, so dass die Achse des Werkzeugs mit der Achse der Führungsbohrung übereinstimmt. Anschließend wird die Bohrung dann durchgeführt. Für jede einzelne Führungsbohrung werden diese Schritte wiederholt.

Vorteilhafterweise kann die Spannvorrichtung zusätzlich einen Dreharm, eine Neigungsskala zum Ablesen des Neigungswinkels, eine Drehskala zum Ablesen des Drehwinkels, eine Aufnahme des Rohlingshalters zur Befestigung des Rohlings, eine Fixierung des Rohlingshalters, eine erste Mutter zur Fixierung des Drehwinkels, eine zweite Mutter zur Fixierung des Neigungswinkels umfassen, wobei die Aufnahme als ein Gegenstück zum Rohlingshalter ausgebildet ist.

Der Dreharm an dem der Rohling befestigt wird ermöglicht eine Verstellung des Neigungswinkels, wobei der Neigungswinkel mittels der Neigungsskala ablesbar ist. Der Rohlingshalter ist in einer Halterung zur Aufnahme fixiert, die drehbar am Dreharm zur Verstellung des Drehwinkels angebracht ist. Der Drehwinkel kann mittels der Drehungsskala abgelesen werden. Nachdem der Neigungswinkel und der Drehwinkel eingestellt wurden, erfolgt die Fixierung mittels einer ersten und einer zweiten Mutter. Der Rohlingshalter weist einen Stift auf, der in eine Nut an der Aufnahme des Rohlingshalters greift, um den Rohling Rohlingshalters greift, um den Rohling verdrehsicher zu fixieren.

Vorteilhafterweise können die Verstellungsmittel eine Verstellung des Neigungswinkels zwischen 0° und 90° und eine Verstellung des Drehwinkels zwischen 0° und 360° ermöglichen.

Dadurch wird die Positionierung des Rohlings für eine beliebige Führungsbohrung ermöglicht.

### Kurzbeschreibung der Zeichnungen

Ausführungsbeispiele der Erfindung sind in der Zeichnung dargestellt. Es zeigt die
- Fig. 1: eine Skizze eines virtuellen 3D-Bohrschablonenmodells;
- Fig. 2: eine Skizze eines Rohlings, der in einer Spannvorrichtung eingespannt ist;
- Fig. 3: eine Skizze eines Rohlings mit einer Bohrvorrichtung zur Durchführung der geplanten Führungsbohrung;
- Fig. 4: eine Skizze eines Rohlings, der in einer alternativen Spannvorrichtung eingespannt ist;
- Fig. 5: eine Skizze einer Fertigungsvorrichtung mit dem Rohling, der mit Führungsbohrungen versehen ist;
- Fig. 6: eine Skizze der Fertigungsvorrichtung nach dem Herausarbeiten der Bohrschablone aus dem eingespannten Rohling.

### Ausführungsbeispiele

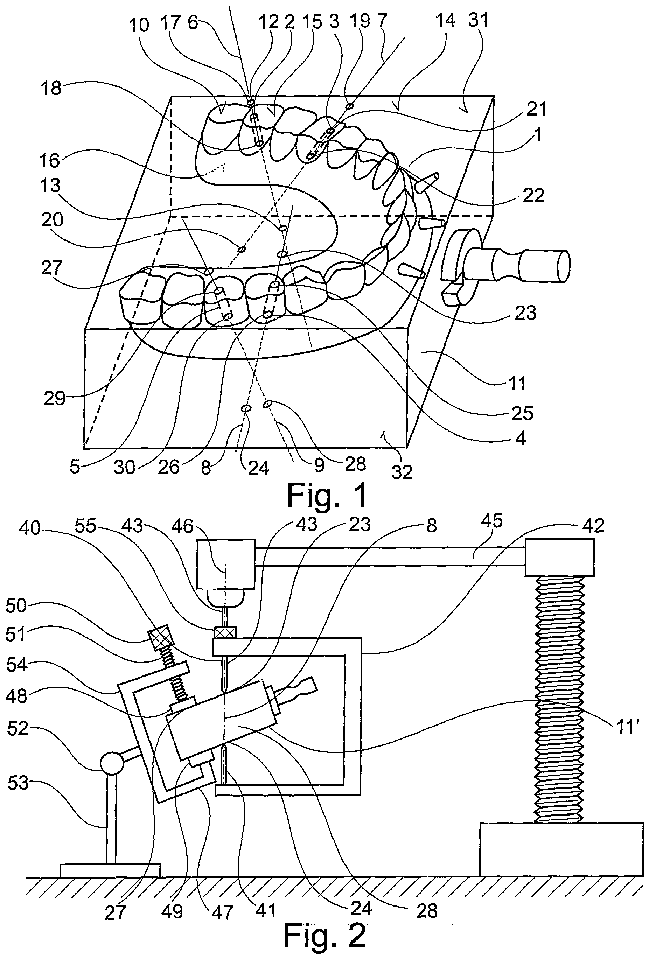

Die Fig. 1 zeigt eine Skizze eines virtuellen 3D-Bohrschablonenmodells 1 mit vier Führungsbohrungen 2, 3, 4, 5 entlang der Führungsbohrungsachsen 6, 7, 8 und 9, wobei das 3D-Bohrschablonenmodell eine virtuelle Auflagefläche 10 aufweist, die der Form der Zähne und eines Teils des Gaumens entspricht. Das virtuelle 3D-Bohrschablonenmodell wird virtuell innerhalb eines 3D-Rohlingsmodells 11 angeordnet. Die virtuelle Anordnung kann automatisch computergestützt oder durch einen Benutzer unter Verwendung eines Computerbildschirms und einer Maus bzw. Tastatur erfolgen. Nach dem endgültigen Festlegen der Position des 3D-Bohrschablonenmodells innerhalb des 3D-Rohlingsmodells werden die Durchtrittsstellen 12 und 13 der Führungsbohrungsachse 6 auf einer virtuellen Außenfläche 14 des 3D-Rohlingsmodells 11 bestimmt. Es werden auch auf den beiden Außenflächen 15 und 16 des 3D-Bohrschablonenmodells 1 Durchtrittsstellen 17 und 18 bestimmt. Für die Führungsbohrungsachse 7 werden entsprechend die Durchtrittsstellen 19 und 20 auf der Außenfläche 14 des 3D-Rohlingsmodells sowie die Durchtrittsstellen 21 und 22 auf den beiden Außenflächen 15 und 16 des 3D-Bohrschablonenmodells bestimmt. Für die Führungsbohrungsachse 8 werden die Durchtrittsstellen 23 und 24 auf der Außenfläche 14 sowie die Durchtrittsstellen 25 und 26 auf den Außenflächen 15 und 16 bestimmt. Für die vierte Führungsbohrungsachse 9 werden die Durchtrittsstellen 27 und 28 auf den Außenfläche 14 sowie die Durchtrittsstellen 29 und 30 auf den beiden Außenflächen 15 und 16 bestimmt. Die Bestimmung der Durchtrittsstellen kann computergestützt oder automatisch erfolgen, da die Anordnung des 3D-Bohrschablonenmodells innerhalb des 3D-Rohlingsmodells und die Führungsbohrungsachsen 6, 7, 8 und 9 bekannt sind.

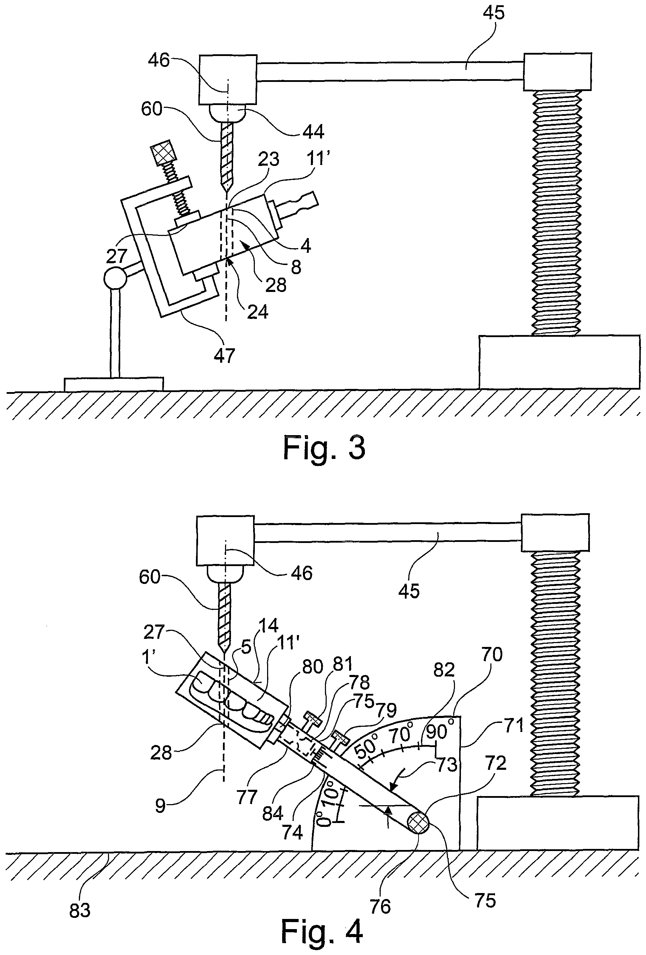

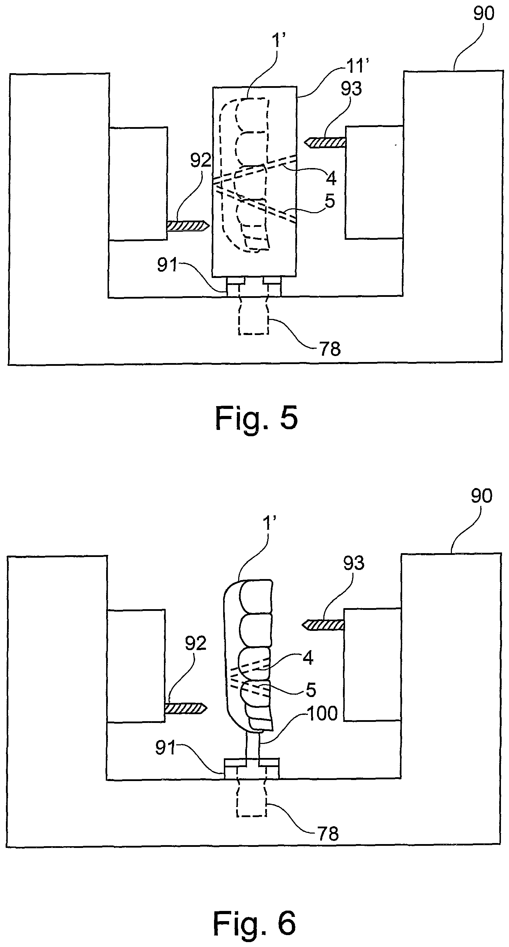

In einer ersten Ausführungsform des erfinderischen Verfahrens werden im ersten Schritt an den Durchtrittsstellen 12, 19, 23 und 27 auf der oberen Seite 31 der Außenfläche 14 sowie an den Durchtrittsstellen 13, 20, 28 und 24 an der unteren Seite 32 der Außenfläche 14 mittels einer Fertigungsvorrichtung, die in Fig. 5 und 6 dargestellt ist, Markierungen angebracht. Im zweiten Schritt wird der Rohling, wie in Fig. 2 dargestellt, in eine Spannvorrichtung eingespannt und mittels einer Fixiervorrichtung in seiner Lage fixiert. In einem dritten Schritt werden an den Markierungen, wie in Fig. 3 und 4 gezeigt, Führungsbohrungen mittels einer Bohrvorrichtung, wie geplant, durchgeführt. In einem vierten Schritt wird der Rohling mit den Führungsbohrungen, wie in Fig. 5 und 6 gezeigt, wieder in die Fertigungsvorrichtung eingespannt und die Bohrschablone entsprechend der geplanten Form und Lage des virtuellen 3D-Bohrschablonenmodells 1 innerhalb des 3D-Rohlingsmodells 11 aus dem Rohling herausgearbeitet.

Nach einer zweiten alternativen Ausführungsform des erfinderischen Verfahrens wird zunächst mittels der Fertigungsvorrichtung aus Fig. 5 und 6 die Bohrschablone 1' aus dem Rohling 11' herausgearbeitet, wobei an den Durchtrittsstellen 17, 21, 25 und 29 auf der oberen Außenfläche 15 der Bohrschablone 1' sowie an den Durchtrittsstellen 18, 22, 26 und 30 an der unteren Außenfläche 16 der Bohrschablone 1' Markierungen in Form von Vertiefungen angebracht werden. In einem zweiten Schritt wird die Bohrschablone 1' in die Spannvorrichtung aus Fig. 2 zwischen den Markierungen eingespannt und mittels der Fixiervorrichtung fixiert. In einem dritten Schritt werden an den Markierungen der Bohrschablone Führungsbohrungen, wie in Fig. 3, durchgeführt, wobei anstatt des Rohlings 11' die markierte Bohrschablone 1' eingespannt ist. Anstatt der Spannvorrichtung und der Fixiervorrichtung aus Fig. 2 und 3 kann die alternative Spannvorrichtung aus Fig. 4 zur Positionierung der markierten Bohrschablone verwendet werden. Anschließend werden die Führungsbohrungen an der Bohrschablone, wie geplant, an den Markierungen durchgeführt.

Die Fig. 2 zeigt eine Skizze eines Rohlings 11', der an den Durchtrittsstellen 27, 28, 23 und 24 mittels der Fertigungsvorrichtung aus Fig. 5 und 6 mit Markierungen in Form von konischen Vertiefungen versehen wurde. Die übrigen Markierungen an den Durchtrittsstellen 12, 19, 20 und 13 sind nicht dargestellt. Der Rohling 11' ist an den Markierungen 23 und 24 zwischen zwei Stiftspitzen 40 und 41 einer Spannvorrichtung 42 eingespannt. Der Abstand zwischen den beiden Stiftspitzen 40 und 41 lässt sich durch das Verschieben der oberen Stiftspitze 40 verändern und mittels einer Feststellmutter 55 feststellen. Die obere Stiftspitze 40 gehört zu einem durchgehenden Stift 43, der in einem Spannfutter 44 einer Bohrvorrichtung 45 eingespannt ist. Die Bohrvorrichtung 45 kann ein herkömmliches Parallel-Fräsgerät (Parallelometer) sein, der für senkrechte Bohrungen geeignet ist. Dadurch dass der Stift 43 im Spannfutter 44 eingespannt ist, stimmt die geplante Führungsbohrungsachse 8 mit einer Bohrachse 46 des einzusetzenden Werkzeugs der Bohrvorrichtung 45 überein. Der Rohling 11' ist mittels einer Fixiervorrichtung 47 in seiner Lage fixiert. Die Fixiervorrichtung 47 weist Gummibacken 48 und 49 auf, die elastisch sind und, wie in einer Schraubzwinge, mittels eines Griffs 50 und der Gewindeschraube 51 den Rohling 11' von beiden Seiten einspannen. Die Fixiervorrichtung weist ein Kugelgelenk 52 und ein Stativ 53 auf, um eine bewegliche Spannschiene 54 belieb zu verstellen.

In Fig. 3 ist der Aufbau zu einem Verfahrensschritt gezeigt, der auf den Verfahrensschritt aus Fig. 2 folgt. Die Spannvorrichtung 42 aus Fig. 2 wurde aus dem Spannfutter 44 entfernt und durch ein Werkzeug, nämlich einen Bohrer 60 ersetzt, wobei der Rohling 11' in seiner Lage mittels der Fixiervorrichtung 47 fixiert ist und die Bohrachse 46 des Werkzeugs 60 mit der geplanten Führungsbohrungsachse 8 übereinstimmt. Die geplante Führungsbohrung 4 zwischen den Markierungen 23 und 24 wird mittels des Werkzeugs 60 hergestellt. Die übrigen geplanten Führungsbohrungen 2, 3 und 5 werden auf die gleiche Weise durch das Wiederholen der Schritte aus Fig. 2 und 3 hergestellt, nämlich durch das Einspannen des Rohlings mittels der Spannvorrichtung 42 das Fixieren des Rohlings 11' mittels der Fixiervorrichtung 47 und der Durchführung der Bohrung mittels der Bohrvorrichtung 45 zwischen den Markierungen auf den Außenflächen des Rohlings 11', wie in Fig. 3 dargestellt. Nach einem alternativen Verfahren kann auch zunächst die Bohrschablone 1' aus dem Rohling herausgearbeitet werden wobei Markierungen 17, 18, 21, 22, 25, 26, 29 und 30 an den Außenflächen 15 und 16 der Bohrschablone in Form von Vertiefungen mittels der Fertigungsvorrichtung aus Fig. 5 und 6 angebracht werden. Danach wird die markierte Bohrschablone 1', wie in Fig. 2 und 3 dargestellt, in die Spannvorrichtung 42 zwischen den jeweiligen Markierungen einer Bohrung eingespannt, mit der Fixiervorrichtung 47 fixiert und mittels der Bohrvorrichtung die geplante Bohrung durchgeführt.

In Fig. 4 ist eine alternative Spannvorrichtung 70 dargestellt, die einen Sockel 71, ein erstes Verstellmittel 72 zur Verstellung eines Neigungswinkels 73 umfasst, nämlich einen Dreharm 74, der um eine Achse 75 drehbar ist und mit einer Feststellmutter 76 verstellbar ist. Die Spannvorrichtung 70 weist ein zweites Verstellungsmittel zur Verstellung des Drehwinkels auf, der mittels der Drehskala 84 angezeigt wird, wobei das Verstellungsmittel 75 eine Aufnahme 77 des Rohlingshalters 78 aufweist, die drehbar als Verlängerung des Dreharms 74 angeordnet ist und der Drehwinkel mittels einer zweiten Feststellschraube 79 fixierbar ist. Die Aufnahme 77 weist einen Stift 80 auf, der in eine Nut am Rohlingshalter 78 verdrehsicher hineingreift. Der Rohlingshalter 78 wird in der Aufnahme 77 mittels einer dritten Verstellmutter 81 fixiert. Der Neigungswinkel wird auf den Neigungsskala 82 angezeigt. Der Sockel 71 ist auf dem Untergrund 83 frei verschiebbar. Nach dem erfinderischen Verfahren werden für jede Führungsbohrung ein individueller Neigungswinkel und ein individueller Drehwinkel bei der Planung computergestützt berechnet. In Fig. 4 wurde der entsprechende Neigungswinkel und der entsprechende Drehwinkel für die Führungsbohrung 5 zwischen den äußeren Markierungen 27 und 28 an der Außenfläche 14 des Rohlings 11' eingestellt. Anschließend wurde der Sockel 71 auf dem Untergrund 83 so verschoben, dass das Werkzeug 60 der Bohrvorrichtung 45 auf die Markierung 27 aufsetzt. Anschließend wurde die geplante Bohrung 5 mittels des Werkzeugs 60 durchgeführt. Innerhalb des Rohlings 11' ist die geplante Bohrschablone 1' gezeigt, die erst nach der Durchführung aller Führungsbohrungen 2, 3, 4, 5 aus dem Rohling, wie in Fig. 5 und 6 dargestellt, mittels der Fertigungsvorrichtung aus Fig. 5 und 6 herausgearbeitet wird. Zur Durchführung der übrigen Führungsbohrungen 2, 3, 4 müssen die aufgezeigten Verfahrensschritte wiederholt werden, nämlich Einstellen des berechneten Neigungswinkels 73 und des Drehwinkels, das Verschieben des Sockels 71, so dass die Achse 46 des Werkzeugs 60 mit der geplanten Führungsbohrungsachse 9 für das Führungsloch 5 übereinstimmt, und die Durchführung der Bohrung mittels des Werkzeugs 60. Die Spannvorrichtung nach Fig. 4 kann auch für das alternative erfinderische Verfahren verwendet werden bei dem in einem ersten Schritt die Bohrschablone 1' mittels der Fertigungsvorrichtung aus Fig. 5 und 6 herausgearbeitet wird, wobei die obere und untere Außenfläche 15 und 16 der Bohrschablone mit Markierungen als Vertiefungen versehen wird, und erst im zweiten Schritt die Führungsbohrungen an der markierten Bohrschablone durchgeführt werden. Dabei wird die Bohrschablone, die wie in Fig. 6 gezeigt, mit dem Rohlingshalter 78 verbunden bleibt in der Aufnahme 77 eingespannt und der Sockel 71 so verschoben, dass das Werkzeug 60 auf der entsprechenden oberen Markierung aufsetzt. Anschließend wird die geplante Führungsbohrung mittels des Werkzeugs 60 durchgeführt. Das erste Verstellungsmittel 72 und das zweite Verstellungsmittel 75 sind so ausgestaltet, dass der Neigungswinkel zwischen 0° und 90° und der Drehwinkel zwischen 0° und 360° verstellbar ist.

Die Fig. 5 zeigt eine Skizze einer Fertigungsvorrichtung 90 in der der Rohling 11' am Rohlingshalter 78 in einer Fassung 91 eingespannt ist. Unter Verwendung der Fräswerkzeuge 92 und 93 wird die geplante Bohrschablone 1' nach dem 3D-Bohrschablonenmodell 1 aus Fig. 1 herausgearbeitet, in dem die Fertigungsvorrichtung von einem Computer entsprechend angesteuert wird. In Fig. 5 ist der Rohling 11' mit hergestellten Führungsbohrungen 4 und 5 dargestellt, wobei die Führungsbohrungen 4 und 5 nach dem ersten Verfahren aus Fig. 2 und 3 oder nach dem zweiten alternativen Verfahren, wie in Fig. 4 dargestellt, hergestellt wurden.

In Fig. 6 ist die fertige Bohrschablohne 1' mit den durchgeführten Führungsbohrungen 4 und 5 nach dem Herausarbeiten der Bohrschablone aus dem Rohling dargestellt. Die Bohrschablone 1' bleibt mit dem Rohlingshalter 78 über einen Verbindungsstift 100 verbunden, der nachträglich von der Bohrschablone 1' manuell abgeschliffen werden kann.

Bei dem alternativen erfinderischen Verfahren wird im ersten Schritt aus der Rohling 11' die Bohrschablone 1' mit Markierungen an Durchtrittsstellen der Führungsbohrungsachsen herausgearbeitet, wobei die Bohrschablone 1' mit dem Rohlingshalter 78 über den Verbindungsstift verbunden bleibt. Erst im zweiten Schritt wird die markierte Bohrschablone die mit dem Rohlingshalter 78 verbunden ist in die Spannvorrichtung nach Fig. 2 oder nach Fig. 4 eingespannt und die Führungsbohrungen, wie beschrieben, durchgeführt.

### Bezugszeichenliste

- 1: 3D-Bohrschablonenmodell
- 1': Bohrschablone
- 2: Führungsbohrung
- 3: Führungsbohrung
- 4: Führungsbohrung
- 5: Führungsbohrung
- 6: Führungsbohrungsachse
- 7: Führungsbohrungsachse
- 8: Führungsbohrungsachse
- 9: Führungsbohrungsachse
- 10: Auflagefläche
- 11: 3D-Rohlingsmodell
- 11': Rohling
- 12: Durchtrittsstelle
- 13: Durchtrittsstelle
- 14: Außenfläche
- 15: Außenfläche
- 16: Außenfläche
- 17: Durchtrittsstelle
- 18: Durchtrittsstelle
- 19: Durchtrittsstelle
- 20: Durchtrittsstelle
- 21: Durchtrittsstelle
- 22: Durchtrittsstelle
- 23: Durchtrittsstelle
- 24: Durchtrittsstelle
- 25: Durchtrittsstelle
- 26: Durchtrittsstelle
- 27: Durchtrittsstelle/Markierung
- 28: Durchtrittsstelle/Markierung
- 29: Durchtrittsstelle
- 30: Durchtrittsstelle
- 31: obere Seite
- 32: untere Seite
- 40: Stiftspitze
- 41: Stiftspitze
- 42: Spannvorrichtung
- 43: Stift
- 44: Spannfutter
- 45: Bohrvorrichtung
- 46: Bohrachse
- 47: Fixiervorrichtung
- 48: Gummibacke
- 49: Gummibacke
- 50: Griff
- 51: Gewindeschraube
- 52: Kugelgelenk
- 53: Stativ
- 54: Spannschiene
- 55: Feststellmutter
- 60: Bohrer/Werkzeug
- 70: Spannvorrichtung
- 71: Sockel
- 72: Verstellmittel
- 73: Neigungswinkel
- 74: Dreharm
- 75: Achse/Verstellmittel
- 76: Feststellmutter
- 77: Aufnahme
- 78: Rohlingshalter
- 79: Feststellschraube
- 80: Stift
- 81: Verstellmutter
- 82: Neigungsskala
- 83: Untergrund
- 84: Drehskala
- 90: Fertigungsvorrichtung
- 91: Fassung
- 92: Fräswerkzeuge
- 93: Fräswerkzeuge
- 100: Verbindungsstift

## Patentansprüche

1. Verfahren zur Herstellung einer zahnmedizinischen Bohrschablone (1') aus einem Rohling (11'), die eine Führungsbohrung (2, 3, 4, 5) und eine Auflagefläche (10) aufweist, wobei ein virtuelles 3D-Bohrschablonenmodell (1) der Bohrschablone (1') mit einer virtuellen Führungsbohrung (2, 3, 4, 5) entlang einer Führungsbohrungsachse (6, 7, 8, 9) und mit einer virtuellen Auflagefläche (10) vorhanden ist, wobei
i. das virtuelle 3D-Bohrschablonenmodell (1) virtuell innerhalb eines 3D-Rohlingsmodells (11) des Rohlings (11') angeordnet wird, um die Bohrschablone (1') entsprechend der Form und Lage des virtuellen 3D-Bohrschablonenmodells (1) innerhalb des 3D-Rohlingsmodells (11) aus dem Rohling (11') herauszuarbeiten,
ii. wobei vor dem Herausarbeiten der Bohrschablone (1') aus dem Rohling (11') computergestützt virtuell eine Durchtrittsstelle (12, 13, 19, 20, 23, 24, 27, 28) der Führungsbohrungsachse (6, 7, 8, 9) auf einer Außenseite (14, 31, 32) des 3D-Rohlingsmodells (11) bestimmt wird und an der Durchtrittsstelle (12, 13, 19, 20, 23, 24, 27, 28) der Führungsbohrungsachse (6, 7, 8, 9) auf der Außenseite (14, 31, 32) des Rohlings (11') eine Markierung angebracht wird, wobei die Markierung an der Durchtrittsstelle der Führungsbohrungsachse (6, 7, 8, 9) in Form einer Vertiefung mittels einer Fertigungsvorrichtung (90) angebracht wird,
iii. oder wobei auf einer Außenseite (15, 16) des virtuellen 3D-Bohrschablonenmodells (1) eine Durchtrittsstelle (17, 18, 21, 22, 25, 26, 29, 30) der Führungsbohrungsachse (6, 7, 8, 9) bestimmt wird und während bzw. nach dem Herausarbeiten der Bohrschablone (1') aus dem Rohling (11') an der Durchtrittsstelle (17, 18, 21, 22, 25, 26, 29, 30) auf der Außenseite (15, 16) der Bohrschablone (1') eine Markierung angebracht wird, wobei die Markierung an der Durchtrittsstelle der Führungsbohrungsachse (6, 7, 8, 9) in Form einer Vertiefung mittels einer Fertigungsvorrichtung (90) angebracht wird.

2. Verfahren nach Anspruch 1, **dadurch gekennzeichnet, dass** der Rohling (11') vor dem Herausarbeiten der Bohrschablone (1') in eine Fertigungsvorrichtung (90) eingespannt wird und vermessen wird.

3. Verfahren nach Anspruch 1 oder 2, **dadurch gekennzeichnet, dass** die geplante Führungsbohrung (2, 3, 4, 5) vor dem Herausarbeiten der Bohrschablone (1') aus dem Rohling (11') hergestellt wird, wobei vor dem Herausarbeiten der Bohrschablone (1') aus dem Rohling (11') computergestützt virtuell eine Durchtrittsstelle (12, 13, 19, 20, 23, 24, 27, 28) der Führungsbohrungsachse (6, 7, 8, 9) auf einer Außenseite (14, 31, 32) des 3D-Rohlingsmodells (11) bestimmt wird, wobei der Rohling (11') in die Fertigungsvorrichtung (90) eingespannt und vermessen wird, wobei an der Durchtrittsstelle (12, 13, 19, 20, 23, 24, 27, 28) der Führungsbohrungsachse (6, 7, 8, 9) auf der Außenseite (14, 31, 32) des Rohling (11') die Markierung angebracht wird, wobei der Rohling (11') aus der Fertigungsvorrichtung (90) entnommen wird, wobei der markierte Rohling (11') in eine Spannvorrichtung (42) eingespannt wird, wobei mittels einer Fixiervorrichtung (47) der Rohling (11') in seiner Lage fixiert wird, wobei die Spannvorrichtung (42) entfernt wird, wobei die geplante Führungsbohrung (2, 3, 4, 5) mittels einer Bohrvorrichtung (45) an der Markierung durchgeführt wird.

4. Verfahren nach Anspruch 3, **dadurch gekennzeichnet, dass** die Spannvorrichtung (42) zwei Stiftspitzen (40, 41) aufweist und am Rohling (11') zwei Markierungen an beiden Durchtrittsstellen (12, 13, 19, 20, 23, 24, 27, 28) der Führungsbohrung (2, 3, 4, 5) angebracht werden, wobei der markierte Rohling (11') in der Spannvorrichtung (42) an den beiden Markierungen zwischen den Stiftspitzen (40, 41) eingespannt wird.

5. Verfahren nach Anspruch 1 oder 2, **dadurch gekennzeichnet, dass** die geplante Führungsbohrung (2, 3, 4, 5) erst nach dem Herausarbeiten der Bohrschablone (1') aus dem Rohling (11') hergestellt wird, wobei beim Herausarbeiten der Bohrschablone (1') aus dem Rohling (11') die Markierung auf einer Oberfläche der Bohrschablone (1') angebracht wird, wobei ein Rohlingshalter (78) stabil mit der Bohrschablone (1') verbunden bleibt, wobei die Bohrschablone (1') mit dem Rohlingshalter (78) aus der Fertigungsvorrichtung (90) entnommen wird, wobei die Bohrschablone (1') in eine Spannvorrichtung (42) eingespannt wird, wobei mittels einer Fixiervorrichtung (47) der Rohling (11') in seiner Lage fixiert wird, wobei die Spannvorrichtung (42) entfernt wird, wobei mittels einer Bohrvorrichtung (45) die geplante Führungsbohrung (2, 3, 4, 5) an der Markierung hergestellt wird.

6. Verfahren nach Anspruch 2 oder 5, **dadurch gekennzeichnet, dass** die Markierung auf der Oberfläche der Bohrschablone (1') in Form einer Vertiefung mittels der Fertigungsvorrichtung (90) angebracht wird.

7. Verfahren nach Anspruch 5 oder 6, **dadurch gekennzeichnet, dass** die Spannvorrichtung (42) zwei Stiftspitzen (40, 41) aufweist und an der Bohrschablone (1') zwei Markierungen an beiden Durchtrittsstellen der Führungsbohrung (2, 3, 4, 5) angebracht werden, wobei die markierte Bohrschablone (1') in der Spannvorrichtung (42) an den beiden Markierungen zwischen den Stiftspitzen (40, 41) eingespannt wird.

8. Verfahren nach einem der Ansprüche 3 bis 7, **dadurch gekennzeichnet, dass** die Fixiervorrichtung (47) Gummibacken (48, 49) aufweist und der Rohling (11') bzw. die Bohrschablone (1') zwischen den Gummibacken (48, 49) eingespannt wird.

9. Verfahren nach einem der Ansprüche 1 oder 2, **dadurch gekennzeichnet, dass** die geplante Führungsbohrung (2, 3, 4, 5) vor dem Herausarbeiten der Bohrschablone (1') aus dem Rohling (11') hergestellt wird, wobei vor dem Herausarbeiten der Bohrschablone (1') aus dem Rohling (11') computergestützt virtuell eine Durchtrittsstelle (12, 13, 19, 20, 23, 24, 27, 28) der Führungsbohrungsachse (6, 7, 8, 9) auf einer Außenseite (14, 31, 32) des 3D-Rohlingsmodells (11) bestimmt wird, wobei der Rohling (11') in die Fertigungsvorrichtung (90) eingespannt und vermessen wird, wobei an der Durchtrittsstelle der Führungsbohrungsachse (6, 7, 8, 9) auf der Außenseite (14, 31, 32) des Rohling (11') die Markierung angebracht wird, wobei der Rohling (11') aus der Fertigungsvorrichtung (90) entnommen wird, wobei der markierte Rohling (11') in eine Spannvorrichtung (70) an einem Rohlingshalter (78) in eine Spannvorrichtung (70) eingespannt wird und die Spannvorrichtung (70) Verstellungsmittel (72, 75) zur Verstellung eines Neigungswinkels (73) und eines Drehwinkels des Rohling (11') relativ zur Spannvorrichtung (70) aufweist, wobei der Rohling (11') unter Verwendung dieser Verstellungsmittel (72, 75) bezüglich des Neigungswinkels (73) und des Drehwinkels so positioniert wird, dass die geplante Führungsbohrungsachse (6, 7, 8, 9) mit einer Achse eines Werkzeugs einer Bohrvorrichtung (45) zur Durchführung der geplanten Führungsbohrung (2, 3, 4, 5) übereinstimmt, wobei mittels der Bohrvorrichtung (45) die geplante Führungsbohrung (2, 3, 4, 5) an der Markierung durchgeführt wird.

10. Verfahren nach einem der Ansprüche 1 oder 2, **dadurch gekennzeichnet, dass** die geplante Führungsbohrung (2, 3, 4, 5) erst nach dem Herausarbeiten der Bohrschablone (1') aus dem Rohling (11') hergestellt wird, wobei vor dem Herausarbeiten der Bohrschablone (1') aus dem Rohling (11') computergestützt virtuell eine Durchtrittsstelle der Führungsbohrungsachse (6, 7, 8, 9) auf einer Außenseite (14, 31, 32) des 3D-Bohrschablonemodells bestimmt wird, wobei der Rohling (11') in die Fertigungsvorrichtung (90) eingespannt und vermessen wird, wobei beim Herausarbeiten der Bohrschablone (1') aus dem Rohling (11') die Markierung an der Durchtrittsstelle auf einer Oberfläche der Bohrschablone (1') angebracht wird, wobei ein Rohlingshalter (78) stabil mit der Bohrschablone (1') verbunden bleibt, wobei die Bohrschablone (1') mit dem Rohlingshalter (78) aus der Fertigungsvorrichtung (90) entnommen wird, wobei die markierte Bohrschablone (1') in eine Spannvorrichtung (70) am Rohlingshalter eingespannt wird, wobei die Spannvorrichtung (70) Verstellungsmittel (72, 75) zur Verstellung eines Neigungswinkels (73) und eines Drehwinkels der Bohrschablone (1') relativ zur Spannvorrichtung (70) aufweist, wobei der Rohling (11') unter Verwendung dieser Verstellungsmittel (72, 75) bezüglich des Neigungswinkels (73) und des Drehwinkels so positioniert wird, dass die geplante Führungsbohrungsachse (6, 7, 8, 9) mit einer Achse eines Werkzeugs einer Bohrvorrichtung (45) zur Durchführung der geplanten Führungsbohrung (2, 3, 4, 5) übereinstimmt, wobei mittels der Bohrvorrichtung (45) die geplante Führungsbohrung (2, 3, 4, 5) an der Markierung durchgeführt wird.

11. Verfahren nach Anspruch 9 oder 10, **dadurch gekennzeichnet, dass** die Verstellungsmittel (72, 75) eine Verstellung des Neigungswinkels (73) zwischen 0° und 90° und eine Verstellung des Drehwinkels zwischen 0° und 360° ermöglichen.

12. Verfahren nach einem der Ansprüche 3 bis 11, **dadurch gekennzeichnet, dass** mittels der Fertigungsvorrichtung (90) mehrere Markierungen am Rohling (11') beziehungsweise an der Bohrschablone (1') angebracht werden und jede einzelne Führungsbohrung (2, 3, 4, 5) mit einer individuellen Nummerierung versehen wird.

13. Verfahren nach einem der Ansprüche 1 bis 12, **dadurch gekennzeichnet, dass** die Bohrschablone (1') einen Anschlag an der Führungsbohrung (2, 3, 4, 5) aufweist, der zur Beschränkung der Tiefe der durchzuführenden Bohrung dient, wobei der Anschlag als ein Teil der Bohrschablone (1') aus dem Rohling (11') herausgearbeitet wird.

## Claims

1. Method for producing a dental drilling template (1') from a blank (11'), which comprises a guide bore (2, 3, 4, 5) and a bearing surface (10), wherein a virtual 3D drilling template model (1) of the drilling template (1') is provided with a virtual guide bore (2, 3, 4, 5) along a guide bore axis (6, 7, 8, 9) and with a virtual bearing surface (10), wherein
i. the virtual 3D drilling template model (1) is virtually arranged within a 3D blank model (11) of the blank (11'), in order to cut the drilling template (1') out of the blank (11') in accordance with the shape and position of the virtual 3D drilling template model (1) within the 3D blank model (11),
ii. wherein, prior to cutting the drilling template (1') out of the blank (11') and with the aid of a computer, a passage point (12, 13, 19, 20, 23, 24, 27, 28) of the guide bore axis (6, 7, 8, 9) is virtually defined on an outer side (14, 31, 32) of the 3D blank model (11) and a mark is made at the passage point (12, 13, 19, 20, 23, 24, 27, 28) of the guide bore axis (6, 7, 8, 9) on the outer side (14, 31, 32) of the blank (11'), wherein the mark at the passage point of the guide bore axis (6, 7, 8, 9) is made in the form of a depression with the aid of a production device (90).
iii. or wherein a passage point (17, 18, 21, 22, 25, 26, 29, 30) of the guide bore axis (6, 7, 8, 9) is defined on an outer side (15, 16) of the virtual 3D drilling template model (1) and while or after cutting the drilling template (1') out of the blank (11') a mark is made at the passage point (17, 18, 21, 22, 25, 26, 29, 30) on the outer side (15, 16) of the drilling template (1'), wherein the mark at the passage point of the guide bore axis (6, 7, 8, 9) is made in the form of a depression with the aid of a production device (90).

2. Method according to Claim 1, **characterized in that** the blank (11') is clamped into a production device (90) prior to cutting out the drilling template (1') and measured.

3. Method according to Claim 1 or 2, **characterized in that** the planned guide bore (2, 3, 4, 5) is produced prior to cutting the drilling template (1') out of the blank (11'), wherein, prior to cutting the drilling template (1') out of the blank (11') and with the aid of a computer, a passage point (12, 13, 19, 20, 23, 24, 27, 28) of the guide bore axis (6, 7, 8, 9) is virtually defined on an outer side (14, 31, 32) of the 3D blank model (11), wherein the blank (11') is clamped into the production device (90) and measured, wherein the mark is made at the passage point (12, 13, 19, 20, 23, 24, 27, 28) of the guide bore axis (6, 7, 8, 9) on the outer side (14, 31, 32) of the blank (11'), wherein the blank (11') is removed from the production device (90), wherein the marked blank (11') is clamped into a clamping device (42), wherein the blank (11') is fixed in its position by means of a fixing device (47), wherein the clamping device (42) is removed, wherein the planned guide bore (2, 3, 4, 5) is implemented at the mark with the aid of a drilling device (45).

4. Method according to Claim 3, **characterized in that** the clamping device (42) comprises two pin tips (40, 41) and two marks are made on the blank (11') at the two passage points (12, 13, 19, 20, 23, 24, 27, 28) of the guide bore (2, 3, 4, 5), wherein the marked blank (11') is clamped, on the two marks, into the clamping device (42) between the pin tips (40, 41).

5. Method according to Claim 1 or 2, **characterized in that** the planned guide bore (2, 3, 4, 5) is not produced until after the drilling template (1') has been cut out of the blank (11'), wherein the mark is made on a surface of the drilling template (1') when the drilling template (1') is cut out of the blank (11'), wherein a blank holder (78) remains firmly connected to the drilling template (1'), wherein the drilling template (1') is removed from the production device (90) with the blank holder (78), wherein the drilling template (1') is clamped into a clamping device (42), wherein the blank (11') is fixed in its position by means of a fixing device (47), wherein the clamping device (42) is removed, wherein the planned guide bore (2, 3, 4, 5) is produced at the mark with the aid of a drilling device (45).

6. Method according to Claim 2 or 5, **characterized in that** the mark on the surface of the drilling template (1') is made in the form of a depression with the aid of the production device (90).

7. Method according to Claim 5 or 6, **characterized in that** the clamping device (42) comprises two pin tips (40, 41) and two marks are made on the drilling template (1') at the two passage points of the guide bore (2, 3, 4, 5), wherein the marked drilling template (1') is clamped, on the two marks, into the clamping device (42) between the pin tips (40, 41).

8. Method according to any of Claims 3 to 7, **characterized in that** the fixing device (47) comprises rubber jaws (48, 49) and the blank (11') or the drilling template (1') is clamped between the rubber jaws (48, 49).

9. Method according to either of Claims 1 or 2, **characterized in that** the planned guide bore (2, 3, 4, 5) is produced prior to cutting the drilling template (1') out of the blank (11'), wherein, prior to cutting the drilling template (1') out of the blank (11') and with the aid of a computer, a passage point (12, 13, 19, 20, 23, 24, 27, 28) of the guide bore axis (6, 7, 8, 9) is virtually defined on an outer side (14, 31, 32) of the 3D blank model (11), wherein the blank (11') is clamped into the production device (90) and measured, wherein the mark is made at the passage point of the guide bore axis (6, 7, 8, 9) on the outer side (14, 31, 32) of the blank (11'), wherein the blank (11') is removed from the production device (90), wherein the marked blank (11') is clamped into a clamping device (70) on a blank holder (78) in a clamping device (70) and the clamping device (70) comprises adjusting means (72, 75) for adjusting an angle of inclination (73) and an angle of rotation of the blank (11') relative to the clamping device (70), wherein, using said adjusting means (72, 75), the blank (11') is positioned with respect to the angle of inclination (73) and the angle of rotation in such a way that the planned guide bore axis (6, 7, 8, 9) coincides with an axis of a tool of a drilling device (45) for implementing the planned guide bore (2, 3, 4, 5), wherein the planned guide bore (2, 3, 4, 5) is implemented at the mark with the aid of the drilling device (45).

10. Method according to either of Claims 1 or 2, **characterized in that** the planned guide bore (2, 3, 4, 5) is not produced until after the drilling template (1') has been cut out of the blank (11'), wherein, prior to cutting the drilling template (1') out of the blank (11') and with the aid of a computer, a passage point of the guide bore axis (6, 7, 8, 9) is virtually defined on an outer side (14, 31, 32) of the 3D drilling template model, wherein the blank (11') is clamped into the production device (90) and measured, wherein the mark is made at the passage point on a surface of the drilling template (1') when the drilling template (1') is cut out of the blank (11'), wherein a blank holder (78) remains firmly connected to the drilling template (1'), wherein the drilling template (1') is removed from the production device (90) with the blank holder (78), wherein the marked drilling template (1') is clamped into a clamping device (70) on the blank holder, wherein the clamping device (70) comprises adjusting means (72, 75) for adjusting an angle of inclination (73) and an angle of rotation of the drilling template (1') relative to the clamping device (70), wherein, using said adjusting means (72, 75), the blank (11') is positioned with respect to the angle of inclination (73) and the angle of rotation in such a way that the planned guide bore axis (6, 7, 8, 9) coincides with an axis of a tool of a drilling device (45) for implementing the planned guide bore (2, 3, 4, 5), wherein the planned guide bore (2, 3, 4, 5) is implemented at the mark with the aid of the drilling device (45).

11. Method according to Claim 9 or 10, **characterized in that** the adjusting means (72, 75) enable an adjustment of the angle of inclination (73) between 0° and 90° and an adjustment of the angle of rotation between 0° and 360°.

12. Method according to any of Claims 3 to 11, **characterized in that** a number of marks are made on the blank (11') or on the drilling template (1') by means of the production device (90), and each individual guide bore (2, 3, 4, 5) is provided with an individual number.

13. Method according to any of Claims 1 to 12, **characterized in that** the drilling template (1') comprises a stop on the guide bore (2, 3, 4, 5), which serves to limit the depth of the bore to be implemented, wherein the stop is cut out of the blank (11') as a part of the drilling template (1').

## Revendications

1. Procédé de fabrication d'un gabarit de perçage médico-dentaire (1') à partir d'une ébauche (11'), présentant un perçage de guidage (2, 3, 4, 5) et une surface support (10), dans lequel un modèle de gabarit de perçage 3D virtuel (1) du gabarit de perçage (1') présente un perçage de guidage virtuel (2, 3, 4, 5) le long d'un axe de perçage de guidage (6, 7, 8, 9) et une surface support virtuelle (10) est disponible,
i. le modèle de gabarit de perçage 3D virtuel (1) étant disposé virtuellement dans un modèle d'ébauche 3D (11) de l'ébauche (11'), afin d'usiner le gabarit de perçage (1') de façon correspondant à la forme et la position du modèle de gabarit de perçage 3D virtuel (1) au sein du modèle d'ébauche 3D (11) à partir de l'ébauche (11'),
ii. dans lequel avant l'usinage du gabarit de perçage (1') à partir de l'ébauche (11') une zone de guidage (6, 7, 8, 9) sur un côté extérieur (14, 31, 32) du modèle d'ébauche 3D (11) est déterminée virtuellement par ordinateur et un marquage est appliqué sur la zone de passage (12, 13, 19, 20, 23, 24, 27, 28) de l'axe de perçage de guidage (6, 7, 8, 9) sur le côté extérieur (14, 31, 32) de l'ébauche (11'), dans lequel le marquage est appliqué sur la zone de passage de l'axe de perçage de guidage (6, 7, 8, 9) sous la forme d'un creux au moyen d'un système de finition (90),
iii. ou dans lequel sur un côté extérieur (15, 16) du modèle de gabarit de perçage 3D virtuel (1) une zone de passage (17, 18, 21, 22, 25, 26, 29, 30) de l'axe de perçage de guidage (6, 7, 8, 9) est déterminée et, pendant ou après l'usinage du gabarit de perçage (1') à partir de l'ébauche (11'), un marquage est appliqué sur la zone de passage (17, 18, 21, 22, 25, 26, 29, 30) sur le côté extérieur (15, 16) du gabarit de perçage (1'), dans lequel le marquage est appliqué sur la zone de passage de l'axe de perçage de guidage (6, 7, 8, 9) sous la forme d'un creux au moyen d'un système de finition (90).

2. Procédé selon la revendication 1, **caractérisé en ce que** l'ébauche (11') est serrée et mesurée avant l'usinage du gabarit de perçage (1') dans un système de finition (90).

3. Procédé selon la revendication 1 ou 2, **caractérisé en ce que** le guidage de perçage (2, 3, 4, 5) planifié est fabriqué avant l'usinage du gabarit de perçage (1') à partir de l'ébauche (11'), dans lequel avant l'usinage du gabarit de perçage (1') à partir de l'ébauche (11') une zone de passage (12, 13, 19, 20, 23, 24, 27, 28) de l'axe de perçage de guidage (6, 7, 8, 9) sur un côté extérieur (14, 31, 32) du modèle d'ébauche 3D (11) est déterminée virtuellement par ordinateur, dans lequel l'ébauche (11') est serrée et mesurée dans le système de finition (90), dans lequel le marquage est appliqué sur la zone de passage (12, 13, 19, 20, 23, 24, 27, 28) de l'axe de perçage de guidage (6, 7, 8, 9) sur le côté extérieur (14, 31, 32) de l'ébauche (11'), dans lequel l'ébauche (11') est retirée du système de finition (90), dans lequel l'ébauche (11') marquée est serrée dans un système de serrage (42), dans lequel l'ébauche (11') est fixée dans sa position au moyen d'un système de fixation (47), dans lequel le système de serrage (42) est éloigné, dans lequel le perçage de guidage (2, 3, 4, 5) planifié est réalisé au moyen d'un système de perçage (45) sur le marquage.

4. Procédé selon la revendication 3, **caractérisé en ce que** le système de serrage (42) présente deux pointes de stylet (40, 41) et deux marquages sont appliqués sur l'ébauche (11') sur les deux zones de passage (12, 13, 19, 20, 23, 24, 27, 28) du perçage de guidage (2, 3, 4, 5), dans lequel l'ébauche (11') marquée est serrée dans le système de serrage (42) au niveau des deux marquages entre les pointes de stylet (40, 41).

5. Procédé selon la revendication 1 ou 2, **caractérisé en ce que** le perçage de guidage (2, 3, 4, 5) planifié est fabriqué seulement après l'usinage du gabarit de perçage (1') à partir de l'ébauche (11'), dans lequel lors de l'usinage du gabarit de perçage (1') à partir de l'ébauche (11') le marquage est appliqué sur une surface du gabarit de perçage 1'), dans lequel un support d'ébauche (78) reste lié de manière stable avec le gabarit de perçage (1'), dans lequel le gabarit de perçage (1') est retiré du système de finition (90) avec le support d'ébauche (78), dans lequel le gabarit de perçage (1') est serré dans un système de serrage (42), dans lequel l'ébauche (11') est fixée dans sa position au moyen d'un système de fixation (47), dans lequel le système de serrage (42) est retiré, dans lequel le perçage de guidage (2, 3, 4, 5) planifié est réalisé sur le marquage au moyen d'un système de perçage (45).

6. Procédé selon la revendication 2 ou 5, **caractérisé en ce que** le marquage est appliqué sur la surface du gabarit de perçage (1') sous la forme d'un creux au moyen du système de finition (90).

7. Procédé selon la revendication 5 ou 6, **caractérisé en ce que** le système de serrage (42) présente deux pointes de stylet (40, 41) et deux marquages sont appliqués sur le gabarit de perçage (1') sur les deux zones de passage du perçage de guidage (2, 3, 4, 5), dans lequel le gabarit de perçage (1') marqué est serré dans le système de serrage (42) au niveau des deux marquages entre les pointes de stylet (40, 41).

8. Procédé selon une des revendications 3 à 7, **caractérisé en ce que** le système de fixation (47) présente des mâchoires en caoutchouc (48, 49) et l'ébauche (11') ou le gabarit de perçage (1') est serré(e) entre les mâchoires en caoutchouc (48, 49).

9. Procédé selon une des revendications 1 ou 2, **caractérisé en ce que** le perçage de guidage (2, 3, 4, 5) planifié est réalisé avant l'usinage du gabarit de perçage (1') à partir de l'ébauche (11'), dans lequel avant l'usinage du gabarit de perçage (1') à partir de l'ébauche (11') une zone de passage (12, 13, 19, 20, 23, 24, 27, 28) de l'axe de perçage de guidage (6, 7, 8, 9) sur un côté extérieur (14, 31, 32) du modèle d'ébauche 3D (11) est déterminée virtuellement par ordinateur, dans lequel l'ébauche (11') est serrée et mesurée dans le système de finition (90), dans lequel le marquage est appliqué sur la zone de passage de l'axe de perçage de guidage (6, 7, 8, 9) sur le côté extérieur (14, 31, 32) de l'ébauche (11'), dans lequel l'ébauche (11') est retirée du système de finition (90), dans lequel l'ébauche (11') marquée est serrée dans un système de serrage (70) sur un support d'ébauche (78) dans un système de serrage (70) et le système de serrage (70) présente des moyens de réglage (72, 75) pour le réglage d'un angle d'inclinaison (73) et d'un angle de rotation de l'ébauche (11') par rapport au système de serrage (70), dans lequel l'ébauche (11'), lors de l'utilisation de ces moyens de réglage (72, 75), est positionnée, concernant l'angle d'inclinaison (73) et l'angle de rotation, de sorte que l'axe de perçage de guidage (6, 7, 8, 9) planifié coïncide avec un axe d'un outil d'un système de perçage (45) pour la réalisation du perçage de guidage (2, 3, 4, 5) planifié, dans lequel le perçage de guidage (2, 3, 4, 5) planifié est réalisé sur le marquage au moyen du système de perçage (45).

10. Procédé selon une des revendications 1 ou 2, **caractérisé en ce que** le perçage de guidage (2, 3, 4, 5) planifié est réalisé seulement après l'usinage du gabarit de perçage (1') à partir de l'ébauche (11'), dans lequel avant l'usinage du gabarit de perçage (1') à partir de l'ébauche (11') une zone de passage de l'axe de perçage de guidage (6, 7, 8, 9) sur un côté extérieur (14, 31, 32) du modèle de gabarit de perçage 3D est déterminée virtuellement par ordinateur, dans lequel l'ébauche (11') est serrée et mesurée dans le système de finition (90), dans lequel lors de l'usinage du gabarit de perçage (1') à partir de l'ébauche (11') le marquage est appliqué sur la zone de passage sur une surface du gabarit de perçage (1'), dans lequel un support d'ébauche (78) reste relié de manière stable avec le gabarit de perçage (1'), dans lequel le gabarit de perçage (1') est retiré du système de finition (90) avec le support d'ébauche (78), dans lequel le gabarit de perçage (1') marqué est serré dans un système de serrage (70) sur le support d'ébauche, dans lequel le système de serrage (70) présente des moyens de réglage (72, 75) pour le réglage d'un angle d'inclinaison (73) et d'un angle de rotation du gabarit de perçage (1') par rapport au système de serrage (70), dans lequel l'ébauche (11'), lors de l'utilisation de ces moyens de réglage (72, 75), est positionnée, concernant l'angle d'inclinaison (73) et l'angle de rotation, de sorte que l'axe de perçage de guidage (6, 7, 8, 9) planifié coïncide avec un axe d'un outil d'un système de perçage (45) pour la réalisation du perçage de guidage (2, 3, 4, 5) planifié, dans lequel le perçage de guidage (2, 3, 4, 5) planifié est réalisé sur le marquage au moyen du système de perçage (45).

11. Procédé selon la revendication 9 ou 10, **caractérisé en ce que** les moyens de réglage (72, 75) permettent un réglage de l'angle d'inclinaison (73) entre 0 ° et 90 ° et un réglage de l'angle de rotation entre 0 ° et 360 °.

12. Procédé selon une des revendications 3 à 11, **caractérisé en ce que** plusieurs marquages sont appliqués sur l'ébauche (11'), respectivement sur le gabarit de perçage (1') au moyen du système de finition (90) et chaque perçage de guidage (2, 3, 4, 5) particulier est pourvu d'une numérotation individuelle.

13. Procédé selon une des revendications 1 à 12, **caractérisé en ce que** le gabarit de perçage (1') présente une butée sur le perçage de guidage (2, 3, 4, 5), servant à limiter la profondeur du perçage à réaliser, dans lequel la butée est usinée sous la forme d'une partie du gabarit de perçage (1') à partir de l'ébauche (11').
